# EUROPEAN PATENT SPECIFICATION

(11) **EP 0 725 465 B1**
(45) Date of publication and mention of the grant of the patent: **14.04.1999**
(21) Application number: 96100521.2
(22) Date of filing: 16.01.1996
(51) Int. Cl.: H02G 3/04

(54) **Wall- and skirting board-type trunking for cables or the like**
Wand- oder Sockelleistenkanal für elektrischen Kabeln oder dergleichen
Canalisation de câbles de type murale ou plinthe

(30) Priority: 02.02.1995 IT GE950006 U
(43) Date of publication of application: 07.08.1996
(73) Proprietor: BOCCHIOTTI SOCIETA'PER L'INDUSTRIA ELETTROTECNICA S.P.A., I-16121 Genova (IT)
(72) Inventor: Messeri, Massimo, I-16121 Genova (IT)
(74) Representative: Porsia, Attilio, Dr.

(56) References cited:
- DE-B- 1 234 821
- DE-C- 846 713
- FR-A- 2 408 929
- FR-A- 2 473 226

## Description

The present invention relates to cable trunking and in particular to so-called wall- and skirting board-type cable trunking.

Wall- and skirting board-type cable trunking is known; such trunking is often designed to be used in environments where the functionality of the electrical equipment connected by the trunking has to be combined with a sufficiently attractive appearance, as in the case of offices and private homes.

Cable trunking as described above often consists of a supporting channel divided into a number of compartments, often differing dimensionally from each other, with a cover which is generally different according to whether the trunking is laid vertically up the wall or in a skirting board position, that is along the wall parallel with and close to the floor; the channel and the cover are generally made of extruded plastic.

The channel and the cover are connected together by mutually connecting parts on both the lateral margins of the cover and on the lateral walls of the supporting channel. These parts may take the form of, for example, ribs fitted into slots.

Trunking of this type, already known in the prior art, has in general a great many drawbacks from the point of view of both installation and subsequent maintenance on the cables laid inside them.

One defect common to many types of trunking of the prior art is the difficulty of getting them to lie closely against an uneven wall surface and fixing them to it.

In document DE-C-846713 is described a trunking having a support channel in which the back is concave in cross section, so as to improve the seating of the trunking back against any kind of wall. However, such a trunking doesn't take into account of the defects of the surface on which the said support channel is fixed.

Also known, for example from European Patent Application 95105146.5 by the same applicant, is trunking comprising a supporting channel that may have a plurality of compartments, each with its own compartment cover but all accessible through the same cover common to the entire supporting channel; this feature may cause problems when installing the trunking or when later inspecting or maintaining it.

It is an object of the present invention to provide trunking that can be used equally well on a wall or in a skirting board position, even on very uneven surfaces, but which can nevertheless be installed with great ease.

It is another object of the present invention to provide trunking that has a cover formed in such a way as to allow direct access to the different compartments into which the supporting channel is divided.

The subject of the present invention is therefore wall- and skirting board-type trunking for electrical cables comprising a supporting channel with a back that can be fixed to a wall, and with two lateral walls extending from said back; and a cover consisting of a closing surface and two lateral margins, said lateral walls of the supporting channel and said lateral margins of the cover having means of mutual connection, wherein said supporting channel is provided with a series of seating holes for the wall fixing means, the trunking being characterized in that said back of the supporting channel is curved so that the cross section of said supporting channel is concave, and the lateral walls of said supporting channel are each provided with a generally curled or C-shaped flexible tongue whose free extremity faces the respective lateral wall.

Another feature of the invention is a cable trunking in which the cover consists of a plurality of independent parts divided from each other along the length of the trunking, the supporting channel of said cable trunking being divided into a plurality of compartments, and said dividing walls inside the channel comprising one or more parts that connect with the parts of the cover.

Other advantages and features of the present invention will become clear in the following detailed description of an embodiment thereof, offered purely by way of a non-restricting example and referring to the accompanying drawings, in which:
Figure 1 is a view in cross section of the supporting channel of the cable trunking according to the invention before the trunking is fixed to a wall;
Figure 2 is a view in cross section of the cable trunking according to the invention when fixed to a wall;
Figure 3 is a view in cross section of an embodiment of the trunking cover according to the invention;
Figure 4 is a view in cross section of another embodiment of the trunking cover according to the invention; and
Figure 5 is a view in cross section of an enlarged detail of Figure 1.

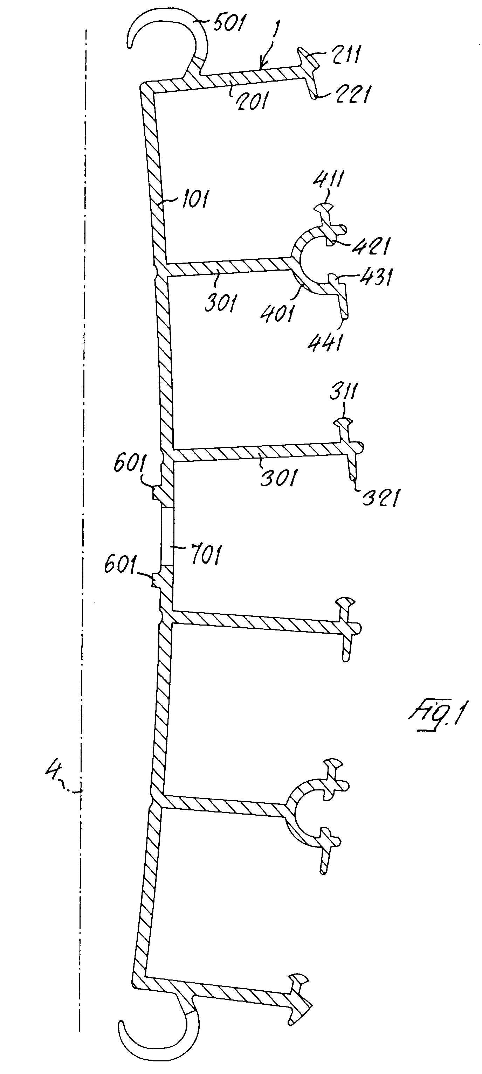

In Figure 1, the numeral 1 denotes the supporting channel of cable trunking according to the present invention. This supporting channel 1 is shown in section and close to a wall 4 to which it is to be fixed. This supporting channel comprises a back 101 that is concave in cross section from the point of view of the supporting channel 1. Along its longitudinal axis, the back 101 comprises a series of holes 701, the purpose of which will be described below. Along the lateral edges of said back 101 run two lateral walls 201 that extend radially from said back 101. The supporting channel 1 is divided internally by a series of dividing walls 301 that extend, also radially, from the back 101 and divide said supporting channel into a plurality of compartments, five in the case illustrated here. On the free edges of the lateral walls 201 are two projections 211 and 221 projecting normally to said wall, one pointing outwards and the other inwards into the supporting channel 1: their purpose will be explained below. On the free edges of the dividing walls 301 there may be a bifurcation 401 with two arms symmetrical about said dividing wall 301. At the end of one arm of the bifurcation is a button-tipped projection 441 and, extending into the interior of the bifurcation, a tooth-like projection 421, while on the other arm is a similar tooth-like projection 431 and, extending away from the bifurcation, a projection 441. Alternatively, said dividing walls 301 comprise a button-tipped projection 311 and a tooth-like projection 321 on the opposite edge from the wall, the purpose of which will be explained below. The lateral walls 201 each comprise, joined close to the back 101, a generally C-shaped tongue 501. The free extremity of the tongue 501 is towards the same lateral wall 201. In addition the underside of the back has two longitudinal ribs 601 between which the holes 701, whose purpose will be explained below, are located.

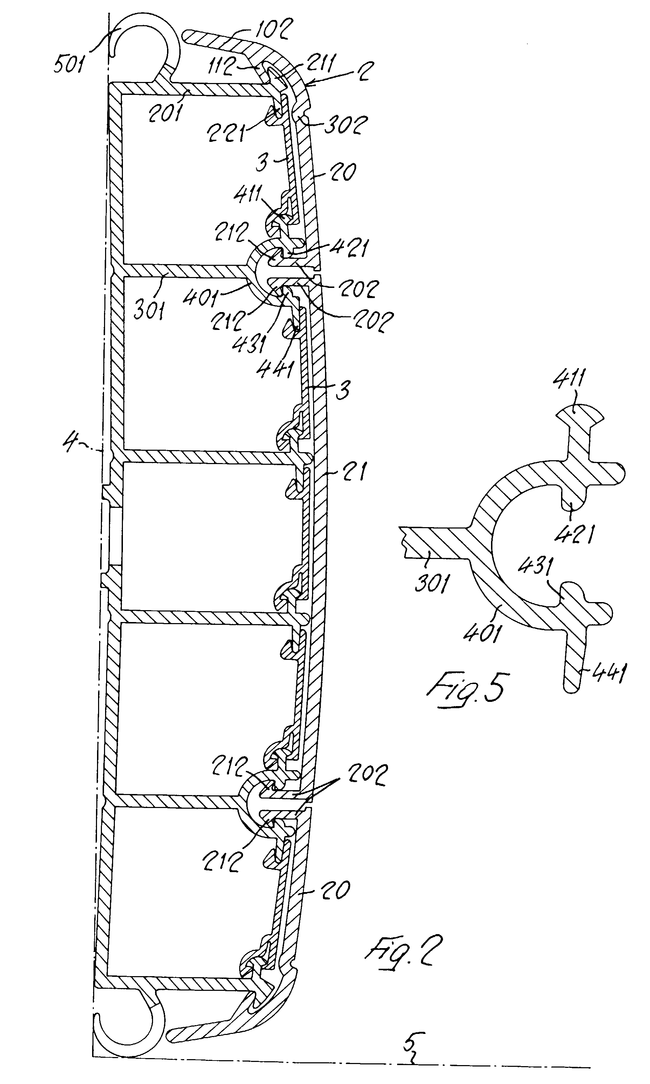

Figure 2 illustrates cable trunking according to the invention fixed to a wall 4. The supporting channel 1 is the same as that shown in Figure 1 and identical parts are marked with the same numbers. The supporting channel 1 is now closed by a cover 2 that has two lateral margins 102 and two closing surfaces 20, each directly connected to a lateral margin 102, and in addition a connecting surface 21 attached to the supporting channel 1 in the manner described later. The closing surfaces 20 and 21 are separate from each other. The lateral margins 102 of the cover each comprise on the inside face a rib 112 that extends upwards and engages with the projection 211 of the lateral wall 201 of the supporting channel 1. Between the lateral margin 102 and the closing surface 20 is a groove 302 by way of a hinge. The edge of the closing surface 20 furthest from the lateral margin 102 ends in an intermediate margin 202 on whose free edge is a hook 212. The hook 212 engages with the tooth-like projection 421 inside the bifurcation 401 and thus secures the closing surface 20 to the supporting channel 1. In the same way the two intermediate margins 202 of the closing surface 21 are secured in position by inserting the hooks 212 into the bifurcations 401. The compartments in which the supporting channel 1 is divided by the dividing walls 301 are closed by the compartment covers 3, which in this case are of the type illustrated and described by the present applicant in European Patent Application 95105146.5.

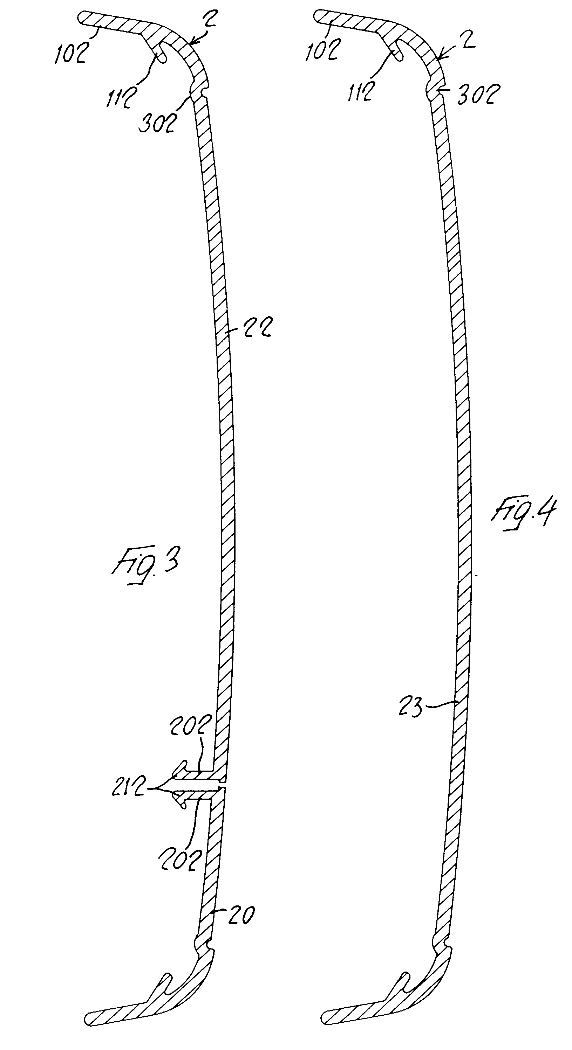

Illustrated in Figure 3 is a second embodiment of the cover according to the invention. Here, the cover has just two closing surfaces 22 and 20, each of which is directly connected to a lateral margin 102 and to an intermediate margin 202. Lastly, in Figure 4 there is just one closing surface 23, which is connected to both lateral margins 102; in this case there are of course no intermediate margins 202.

Figure 5 meanwhile shows the bifurcation 401 of a dividing wall 301 in detail.

The use of the cable trunking according to the invention will be clear from the following. The supporting channel 1, as illustrated in Fig. 1 and described above, has a concave back 101. When this supporting channel 101 is secured to the wall 4 by suitable fixing means 100, the consequences are as follows: the curvature of the back 101, partly offset by the ribs 601, ensures that the contact between the wall 4 and said back is excellent whatever the condition of the surface of this wall; moreover, because of this curvature, it is unnecessary to fix said supporting channel 1 elsewhere than through the holes 701 described above. The tongues 501, advantageously made of a flexible material, ensure that defects in either the surface of the wall 4 or the surface of the floor 5 are aesthetically concealed.

The cable trunking of the present invention presents further advantages in other respects: the possibility of dividing the cover 2 into a plurality of closing surfaces of different dimensions can make it easier to access certain particular compartments for certain lengths, as opposed to others, when installing the device, so that removing the cover is not complicated; for, in the case illustrated in Fig. 2, if the engineer needs to inspect one of the two lateral compartments covered by closing surfaces 20, he need simply insert some suitable tool into the slot separating one closing surface 20 from the closing surface 21; the hook 212 of the intermediate margin 202 will thus be disengaged from the tooth-like projection 421 and the portion of the cover of the closing surface 20 will be removable once the projection 211 has been disengaged from the rib 112. It is thus now possible to inspect the compartment. The same applies to inspecting one of the compartments under closing surface 21. The cover can of course even be made with as many independent closing surfaces as there are compartments. It goes without saying that for a given number of independent closing surfaces an appropriate number of bifurcations 402 will be necessary to enable the intermediate margins of these independent closing surfaces to be inserted. In particular, as can be deduced from the examples illustrated and described herein - refer to Figures 3 and 4 - where there are N independent closing surfaces there will have to be N-1 bifurcations on the dividing walls of the supporting channel.

In this way the wall- and skirting board-type cable trunking according to the present invention can be fixed easily and effectively to any wall whatever its surface may be like, and it is also possible to gain access to the compartments into which the supporting channel of said cable trunking is divided, quickly and without having to remove the whole cover.

## Claims

1. Wall- and skirting board-type trunking for electrical cables comprising a supporting channel (1) with a back (101) that can be fixed to a wall (4), and with two lateral walls (201) extending from said back (101); and a cover (2) consisting of at least one closing surface (20, 21, 23) and two lateral margins (102), said lateral walls (201) of the supporting channel (1) and said lateral margins (102) of the cover (2) having means of mutual connection (112, 211), said supporting channel (1) being provided with a series of seating holes (701) for the wall fixing means, the trunking being characterized in that the said back (101) of the supporting channel (1) is curved so that the cross section of said supporting channel (1) is concave, and the lateral walls (201) of said supporting channel (1) are each provided with a generally curled or C-shaped flexible tongue (501) whose free extremity faces the respective lateral wall (201) of the supporting channel (1).

2. Cable trunking according to Claim 1, in which the cover (2) consists of a plurality of independent closing surfaces (20, 21) divided from each other along the length of the trunking (1), the supporting channel of said cable trunking (1) being divided into a plurality of compartments by dividing walls (301), and said dividing walls (301) of the supporting channel comprising at their free edges as many parts (401) that connect with the independent closing surfaces (20, 21) of the cover as there are closing surfaces (20, 21) less one.

3. Cable trunking according to Claim 2, in which said independent closing surfaces (20, 21) are provided, on their lateral edges pointing towards the middle of the channel, with intermediate margins (202) at whose free edges are hooks (212).

4. Cable trunking according to Claim 3, in which said parts (401) that connect with the independent closing surfaces (20, 21) comprise a bifurcation, at the ends of the arms of which are tooth-like projections (421, 431) designed to engage with said hooks (212) of the intermediate margins of the independent closing surfaces (20, 21).

## Patentansprüche

1. Wand- oder Sockelleistenkanal für elektrische Kabel umfassend einen Trägerkanal (1) mit einer Rückseite (101), die an einer Wand (4) befestigt werden kann, und mit zwei seitlichen Wänden (201), die sich von der Rückseite (101) erstrecken; und eine Abdeckung (2), die aus mindestens einer abschließenden Oberfläche (20, 21, 23) und zwei seitlichen Rändern (102) besteht, wobei die seitlichen Wände (201) des Trägerkanals (1) und die seitlichen Ränder (102) der Abdeckung (2) Mittel zur gegenseitigen Verbindung (112, 211) haben, und der Trägerkanal (1) mit einer Reihe von Befestigungslöchern (701) für die Wandbefestigungsmittel versehen ist, wobei der Kanal dadurch gekennzeichnet ist, daß die Rückseite (101) des Trägerkanals (1) gekrümmt ist, so daß der Querschnitt des Trägerkanals (1) konkav ist, und die seitlichen Wände (201) des Trägerkanals (1) jeweils mit einer allgemein gekräuselten oder C-förmigen flexiblen Zunge (501) versehen sind, deren freies Ende der jeweiligen seitlichen Wand (201) des Trägerkanals (1) zugewandt ist.

2. Kabelkanal nach Anspruch 1, dadurch gekennzeichnet, daß bei ihm die Abdekkung (2) aus einer Vielzahl unabhängiger abschließender Oberflächen (20, 21) besteht, die voneinander entlang der Länge des Kanals (1) geteilt sind, wobei der Trägerkanal des Kabelkanals (1) in eine Vielzahl von Abteilungen durch Trennwände (301) geteilt ist, und die Trennwände (301) des Trägerkanals an ihren freien Kanten so viele Teile (401) umfassen, die mit den abschließenden Oberflächen (20, 21) der Abdeckung verbunden sind, wie abschließende Oberflächen (20, 21) weniger eine vorgesehen sind.

3. Kabelkanal nach Anspruch 2, dadurch gekennzeichnet, daß bei ihm die unabhängigen abschließenden Oberflächen (20, 21) an ihren seitlichen Kanten, die zu der Mitte des Kanals zeigen, mit Zwischenrändern (202) versehen sind, an deren freien Kanten Haken (212) vorgesehen sind.

4. Kabelkanal nach Anspruch 3, dadurch gekennzeichnet, daß die Teile (401), die mit den unabhängigen abschließenden Oberflächen (20, 21) verbunden sind, eine Verzweigung umfassen, an deren Enden der Arme zähneartige Vorsprünge (421, 431) sind, die gestaltet sind, um in die Haken (212) der Zwischenränder der unabhängigen abschließenden Oberflächen (20, 21) einzugreifen.

## Revendications

1. Jonction de type paroi et plinthe pour des câbles électriques comportant un canal (1) de support ayant un fond (101) qui peut être fixé à une paroi (4), et deux parois (201) latérales s'étendant à partir du fond (101); et un capot (2) constitué d'au moins une surface (20, 21, 23) de fermeture et de deux rebords (102) latéraux, les parois (201) latérales du canal (1) de support et les rebords (102) latéraux du capot (2) ayant des moyens (112, 211) de connexion mutuelle, le canal (1) de support étant muni d'une série de trous (701) formant siège pour les moyens de fixation de paroi, la jonction étant caractérisée en ce que le fond (101) du canal (1) de support est incurvé, de sorte que la section transversale du canal (1) de support soit concave et les parois (201) latérales du canal (1) de support sont chacunes munies d'une languette (501) souple, sensiblement bouclée ou en forme de C, dont l'extrémité libre est face à la paroi (201) latérale respective du canal (1) de support.

2. Jonction de câble suivant la revendication 1, dans laquelle le capot (2) est constitué d'une pluralité de surfaces (20, 21) de fermeture indépendantes divisée l'une de l'autre suivant la longueur de la jonction (1), le canal (1) de support de la jonction de câble étant divisé en une pluralité de compartiments par des parois (301) de division, et les parois (301) de division du canal de support comportant à leurs bords libres autant de parties (401) se connectant aux surfaces (20, 21) de fermeture indépendantes du capot qu'il y a de surfaces (20, 21) de fermeture moins une.

3. Jonction de câble suivant la revendication 2, dans lequel les surfaces (20, 21) de fermeture indépendantes sont munies, sur leurs bords latéraux pointant vers le milieu du canal, de rebords (202) intermédiaires sur les bords libres desquels se trouvent des crochets (212).

4. Jonction de câble suivant la revendication 3, dans lequel les parties (401) qui se connectent aux surfaces (20, 21) de fermeture indépendantes comportent une bifurcation, aux extrémités des bras de laquelle se trouvent des saillies (421, 431) en forme de dent conçues pour coopérer avec les crochets (212) des rebords intermédiaires des surfaces (20, 21) de fermeture indépendantes.
